# EUROPEAN PATENT SPECIFICATION

(11) **EP 2 347 230 B1**
(45) Date of publication and mention of the grant of the patent: **27.03.2013**
(21) Application number: 09752279.1
(22) Date of filing: 14.10.2009
(51) Int. Cl.: G01H 1/00, G01M 13/04

(54) **Signal analyzer**
Signalanalysator
Analyseur de signaux

(30) Priority: 14.10.2008 US 196058 P
(43) Date of publication of application: 27.07.2011
(73) Proprietor: Aktiebolaget SKF, 415 50 Göteborg (SE)
(72) Inventor: MCGOOGAN, Gerard, Philpston (GB)
(74) Representative: Burö, Sven Peter
(86) International application number: PCT/EP2009/007373
(87) International publication number: WO 2010/043386

(56) References cited:
- EP-A2- 1 258 713
- GB-A- 2 446 035

## Description

### TECHNICAL FIELD

This invention relates to data collectors/analyzers, particularly for in-situ analysis and/or diagnosis of the condition of bearings. More particularly, the present invention relates to off-line bearing vibrational analyzers which comprise digital signal processing.

### BACKGROUND

Vibrations measured by bearing testers or analyzers, for example while a machine is in operation and/or when a machine is subjected to a controlled external excitation, provide an indication of bearing conditions and/or lubrication conditions and/or other mechanical conditions. This may be used to detect abnormalities, plan preventive maintenance and avoid bearing failure. Some vibrational analysis systems comprise a network of sensors which are permanently installed on a plurality of machines and which provide data to a central processor on a continuous or periodic basis. On the other hand, the vibrational analyzers of the present invention are off-line analyzers, that is to say they are devices which a maintenance engineer will take sequentially to each machine which he wishes to analyze. Such off-line analyzers are generally hand-held and generally incorporate or are connectable to one or more sensors, have processing means for analyzing the signal from the sensor and a display. They often permit the collection/recording of data for subsequent downloading to a separate computer system. They are also sometimes called portable data collectors. GB 2 446 035 discloses a portable route-based machine data collector that stores audio files to supplement associated machine performance data, such as vibration data. The audio files, which may include voice comments, audio segments of raw vibration data, or frequency-shifted components of the vibration data, are stored in the data collector as standard-format digital audio files.

The inventors have perceived that off-line data collectors/analyzers and in particular vibration bearing analyzers with configurations in which demodulation and/or filtering of a signal derived from an analogue sensor are performed, may be improved and/or provided with improved functionality.

### SUMMARY OF THE INVENTION

According to one of its aspects, the present invention provides an off-line signal analyzer comprising an analogue to digital converter (ADC). The ADC converts analogue input signals to digital signals. The analogue input signals comprise a phase. The analyzer further comprises a digital signal processor (DSP) configured to perform digital processing on the digital signals from the ADC. The signal analyzer further comprises a wireless transmitter configured to provide a wireless output signal derived from the DSP. According to the invention the wireless output signal is a modulated digital signal and is synchronized with the analogue to digital converter at least with respect to the signal phase.

The analogue to digital converter and the wireless transmitter suitably have a common control clock. The digital signal processor can have a common control clock with the analogue to digital converter and/or the wireless transmitter. The analogue to digital converter, the wireless transmitter, or the digital signal processor is suitably a control clock master and the others are control clock slaves.

In some embodiments it is preferable that the wireless output is configured to transmit a digital signal derived directly from the digital signal processor.

Suitably the wireless transmitter comprises a Bluetooth interface, and then preferably the Bluetooth interface comprises a multi drop Bluetooth interface.

In some embodiments the analyzer further comprises a digital to analogue converter configured to provide an analogue signal to the wireless transmitter derived from the digital signal processor. The digital to analogue converter is then synchronized with the analogue to digital converter at least with respect to the signal phase. Suitably the analogue to digital converter and the digital to analogue converter have a common control clock

According to another one of its aspects, the present invention provides an off-line bearing vibrational analyzer comprising a digital signal processor configured to perform digital processing on a signal comprising bearing vibrational data derived from a sensor input, wherein the bearing analyzer comprises a wireless output configured to transmit a signal derived from the digital signal processor.

Where the wireless output is configured to transmit an analogue signal, the analogue signal may be derived from a digital output of the digital signal processor via a digital to analogue converter.

Where the wireless output is configured to transmit a digital signal derived from a digital output of the digital signal processor, such a signal may undergo signal processing between the digital signal processor and the wireless output, for example, filtering and/or modulation. Alternatively, such a signal to be transmitted may be derived directly from the digital signal processor; i.e. an output from the digital signal processor may be used as in input to the wireless transmitter without any intervening modification of the signal.

The wireless output may provide a real time output, that is to say an output which is configured to be contemporaneous with the input to the vibrational analyzer (for example from a sensor) as opposed, for example, to an output which is stored by the vibrational analyzer for subsequent downloading when data collection has been completed. There may be a time delay between the input to the vibrational analyzer and the real time output; this may be up to a few seconds, for example up to 2 or 3 seconds.

The wireless output may be an external output, that is to say an output configured to provide a signal to an external or peripheral device. The term "peripheral device" is intended to denote a device that may be connected to the vibrational analyzer but which is distinct from the components which are integral with the vibrational analyzer. The components which are integral with the vibrational analyzer include, for example, integral sensors, integral displays (for example an integral screen), integral data processors and integral data storage devices (for example a memory or memory card which may be removable).

It will be appreciated that a vibrational analyzer according to the present invention may be used to analyze the condition of other components, for example gears, in addition to bearings.

### BRIEF DESCRIPTION OF THE DRAWINGS

Embodiments of the invention will now be described, by way of example only, with reference to the accompanying drawings of which:
- Figs 1a-1b: are block diagrams illustrating components which may be included in and possible configurations for a bearing vibrational analyzer,
- Fig 2: illustrates a block diagram of an analyzer comprising digital filtering and demodulation,
- Figs 3-10: illustrate block diagrams of particular embodiments of the present invention.

### DETAILED DESCRIPTION

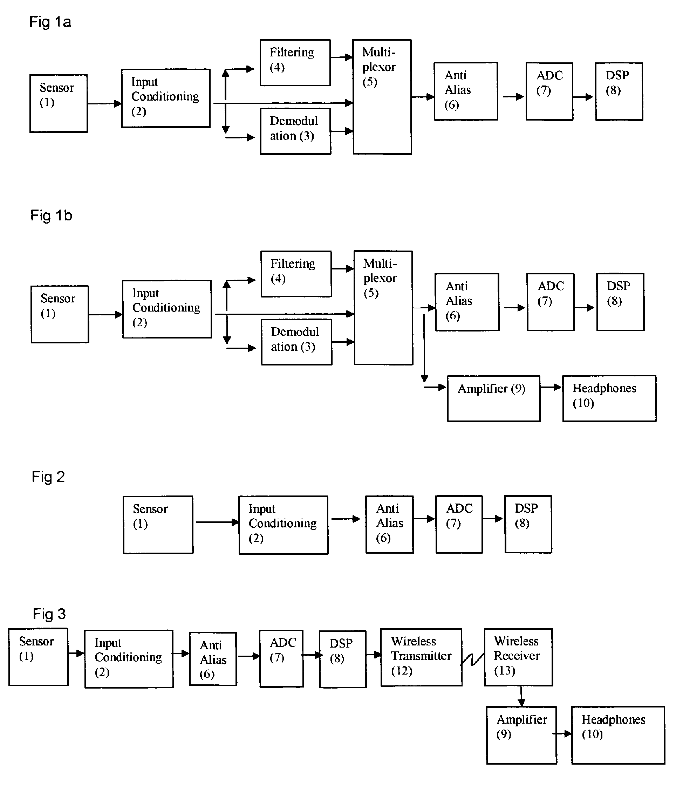

Off-line bearing vibrational analyzers in accordance with the invention may comprise components illustrated with reference to Fig 1 a and Fig 1b. These figures illustrate possible configurations of off-line vibrational analyzers which combine some or all of the following features:
(1) A sensor 1, for example an accelerometer, that measures a parameter that relates to the condition of the machine that is being examined.
(2) Input conditioning 2; providing sensor power and gain if required.
(3) Demodulation 3, typically some form of band limiting filters followed by demodulation (examples are enveloping, GSe). This may also include demodulating signals that are ultrasonic (SEE or Acoustic emissions).
(4) Filtering 4 to remove spurious out of band signals or time domain integration.
(5) A multiplexor 5 to select straight, filtered or demodulated paths.
(6) Anti-alias filter 6 for removal of out of band signals.
(7) An analogue to digital converter (ADC) 7 to convert analogue signal into digital representation.
(8) A digital signal processor (DSP) 8 to perform digital processing, for example FFT.

In addition to the above mentioned features, analyzers will traditionally comprise some kind of user input, such as keys and switches to make selections, and also output(s), such as displays and lights/indicators to give feedback and results to a user. These features are not illustrated.

In off-line vibrational analyzers which use digital signal processing 8, an analogue signal derived from a sensor 1 is converted to a digital signal for treatment by the digital signal processor 8. In configurations similar to that of Fig 1a, filtering 4 and/or demodulation 3 of a signal from the sensor 1 is performed on the analogue signal prior to its conversion to a digital signal. Signal processing is performed at least partly in the analogue domain.

It is often useful and helpful for maintenance engineers to listen to machines being analyzed so as to perceive vibrational characteristics. The previous practice of using a screwdriver pressed against the machine and held to the ear of the user to listen to a running machine is now rarely used due, notably, to health and safety considerations (the proximity of the user's head to rotating machinery and/or the use of ear defenders). In addition, the quality and information that can be detected with such a method is less than optimal.

Fig 1 b shows a configuration which may be used to provide a listening function to a configuration similar to that illustrated in Fig 1a using:
(9) Amplifier 9 to boost output from the analogue signal path to levels required to drive a headphone.
(10) Headphones 10 for a user to listen into the analogue signal.

Such a support for connecting a headphone 10 is a beneficial feature. In the Fig 1b set-up the user may for example be able to select whether to listen to a raw, unfiltered signal, a filtered signal or to the demodulated signal depending on the condition of the machine and personal preference. What is listened to is a live signal and the user can correlate this to the processed signal on the display. This is a radical improvement to using a screwdriver. The headphones 10 might be integrated into hearing protectors. In an attempt to reduce costs in such vibrational analyzers, traditionally only one channel may be made available and/or not all filter paths may be accessible and/or the headphones may for example have a fixed gain.

There is an attempt to move more and more into the digital domain. Fig 2 shows an example of a configuration similar to that of Fig 1a, but with the difference that demodulation and/or filtering functions are performed in the digital domain. This may increase linearity and/or reduce costs. It also allows a greater flexibility as software controlled functionality can be tuned/improved, added and/or deleted without changing any hardware.

Considering a configuration similar to that of Fig 2, unlike that of the Fig 1 a configuration, it is no longer possible to tap off a demodulated and/or filtered signal and feed this to an amplifier 9 and subsequently to headphones 10. As it is important to keep the same phase of the input signal to both headphones and further digital processing, attempts could be made to add a headphone feature to such units by adding analogue filters before a headphone amplifier, similar to the analogue section of Fig 1 b. However, this would be costly and unwieldy and could lead to confusion if the headphones are listening to a different signal than is being collected/displayed by the unit. A further problem is that, just as in the case with listening with a screwdriver, it is not desirable to have loose wires close to for example rotating machinery.

According to the invention these problems are solved by having information/data transmitted wirelessly by having a wireless transmitter, or possibly a transceiver, directly or indirectly connected to a DSP. As can be seen in a first embodiment of the invention in Fig 3, a headphone function is created by feeding the digital processed signal from the DSP (digital signal processor) 8 to a wireless transmitter 12, suitably a transceiver for the possibility of transmission and reception. In addition to the functions described above, the embodiment illustrated in Fig 3 further comprises:
(12) A wireless transmitter 12,
(13) A wireless receiver 13 (which may be part of a peripheral device)

The headphones 10 are suitably connected to an amplifier 9, which in turn is coupled to the wireless receiver 13. The DSP 8 is suitably provided with additional firmware to output the desired signal or stream of data. According to the invention the phase of the signal fed to the headphones is synchronized with the signal being processed by the DSP. This is made possible by synchronizing the information/data that is being wirelessly transmitted with the ADC(s) 7.

Thus in the illustrated embodiments, the wireless output provides a signal derived from the digital signal processor to an external device, e.g. headphones. In some embodiments of the invention, a listening function is created by feeding a digital processed signal from the DSP (digital signal processor) to a wireless transmitter which transmits a signal to a receiver of headphones or of another listening device via a wireless link.

This could involve:
1) Sending the signal to wireless headphones of an operator
2) Sending the signal to another person for their opinion.

In the Fig 3 embodiment, a digital signal derived from the DSP is provided directly to a digital wireless transmitter and transmitted via a wireless link to a digital receiver. In this embodiment, the wireless transmitter is directly synchronized with the ADC(s).

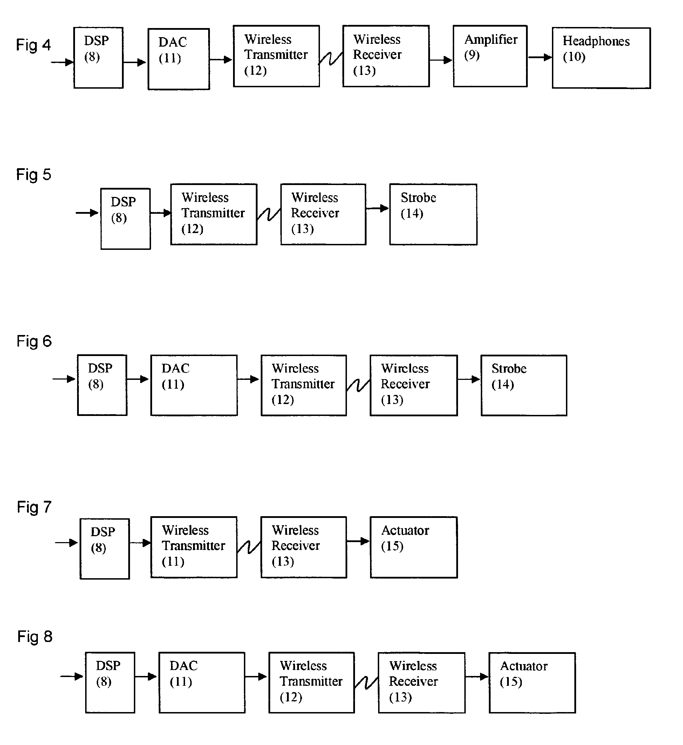

Fig 4 shows an alternative embodiment in which a signal derived from the DSP is transformed into an analogue signal, this analogue signal is provided to an analogue wireless transmitter and transmitted via a wireless link to an analogue receiver; this embodiment comprises:
(11) A DAC 11, driven from the DSP with a digital stream representing, in this embodiment, a desired audio output which drives an (optional) headphone amplifier and headphones.

In this embodiment, the wireless transmitter is indirectly synchronized with the ADC(s), the information/data transmitted by the analogue signal is in phase and it is the DAC(s) that is/are directly synchronized with the ADC(s).

The DSP may be provided with additional firmware to output the desired signal or stream of data. The digital data stream may represent one of the following:
1) The raw signal
2) A filtered signal. The shape and order of the filter are no longer constrained by the hardware present.
3) A filtered and demodulated signal. If required more than one implementation of demodulation can be included.

On multiple channel analyzers any channel may be easily selected. The signal may be attenuated and/or amplified in the digital domain. Different signals may be fed to the left and right ears of headphones. Ultrasonic and/or subsonic signals may be shifted into the audio range. The frequency response of the output digital stream may be customised to an individual, for example to compensate for hearing loss (not uncommon in maintenance engineers). Non measurement related audio, for example pre-recorded signals, may be provided.

As the DSP can generate multiple data streams concurrently, the invention may provide for the user to switch between multiple data streams; this may be achieved without having to wait on filter settling time.

Any device to which the output is connected may be detectable, for example by the device providing an identification signal. This may provide information feedback to identify what peripheral device(s) is or are connected (e.g. headset, printer), and may be used to determine the nature of the output, for example to distinguish if audio, strobe trigger or a sweep signal should be provided as the output. A bi-directional wireless system is needed in these cases. Some wireless systems, for example Bluetooth interfaces, work on profiles. That is, a new device broadcasts what profiles it supports, for example audio, serial, etc. Thus an analyzer in accordance with the invention may be configured to determine the appropriate type of output to be wirelessly directed to a particular peripheral device.

An analyzer according to the invention may have at least one wireless output provided with a signal derived from the digital signal processor. Preferably, it has one or at least one wireless output which is a multifunctional output, i.e. which is an output adapted to be connected to more than one type of device. It is thus possible to have a plurality of peripheral devices, for example headphones and a strobe, connected to the same wireless output, for example by the use of multi drop Bluetooth.

Fig 5 illustrates an embodiment in which a digital signal from the DSP 8 is transmitted via the wireless output to a strobe 14. This may be configured:
1) To trigger a strobe based on the input signal, for example one time.
2) To trigger a strobe based on a user input.
3) To vary the phase and/or frequency of the signal so as to "freeze" a rotating part of e.g. a bearing at desired rotational angles.
4) To trigger a high speed camera to take photographs of the machine for future analysis.

Where a digital signal from the wireless output is received by a digital wireless receiver, this may be converted into an analogue signal prior to being supplied to a peripheral device.

Fig 6 illustrates an embodiment in which a digital signal from the DSP 8 is converted to an analogue signal prior to its transmission to a strobe via a wireless link. The strobe 14 may be used to fire a pulse of light that "freezes" the rotation of the machine. According to the invention, to be able to keep the wirelessly transmitted signal in phase, or most importantly in a known phase relationship to a signal received by the ADC(s), in this embodiment, it is the DAC 11 that is kept synchronized.

Fig 7 and Fig 8 illustrate embodiments which may be used to provide a frequency response/transfer function. The vibrational analyzer may output a signal that is used to excite a machine or structure under examination. In the embodiment of Fig 7, the wireless transmission is digital whereas it is analogue in the embodiment of Fig 8. The signal derived from the DSP 8 and transmitted via the wireless link is fed to an actuator 15 to stimulate a structure to be analyzed. The vibrational analyzer may sweep the output signal up/down in frequency to excite the actuator 15 and thus the structure being analyzed at a plurality of desired frequencies and measure the response.

The vibrational analyzer may also output some form of band limited noise that can be used to measure the system's response.

Where the wireless output provides a headphone output, this may also playback pre-recorded signals/messages that can be used to prompt the user with, for example, an instruction guide. This may be useful:
1) When the user cannot see the unit's screen properly.
2) He does not wish to look at the screen (he wishes to concentrate on other factors, for example personal safety).
3) For entertainment, for example music.
4) For route instructions (what machines, where on the machines, where the machines are)

In the embodiments illustrated in Figs 4 to 8, it is to be understood that the input signal to the DSP 8 is suitable derived from a series arrangement of a sensor 1, input conditioning 2, anti-alias filter 6 and an ADC 7, as shown in Fig. 3.

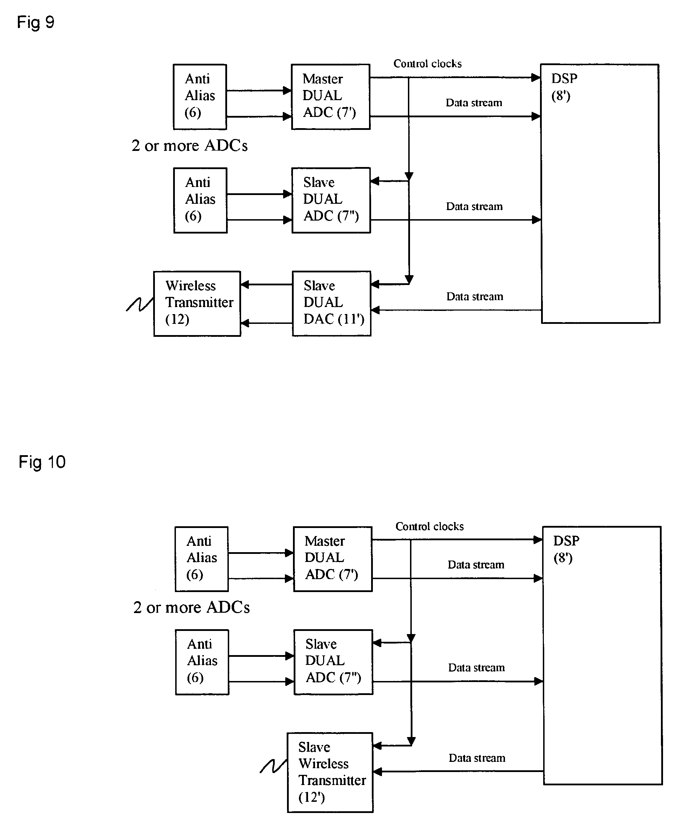

Fig 9 illustrates a configuration which may be used to implement certain embodiments of the invention with an in-phase multi-channel system. The introduction of the Pro Audio standard has brought to the market a number of fast (∼200 kHz), low noise (24 Bit) and low cost ADCs/DACs from several companies. These devices are from a specification point of view suitable for noise and vibration measurement. The invention attains a known and synchronized phase relationship between ADC(s) and DAC(s), from input to output to enable wireless transmission of information/data with a known phase relationship. The signals between the digital units must also be minimised to ensure that coupling from the analogue to the digital circuitry is minimised.

Fig 9 illustrates an implementation of the invention by means of control clocks such as frame/clock, left right clock and bit clock. As is illustrated, the embodiment according to Fig 9 comprises two ADCs 7', 7", one dual DAC 11', and a wireless transmitter 12. According to this implementation, one of the ADCs 7' is a master and the other ADC 7", the DAC 11' and the DSP 8' are control clock slaves. This means that all the digital units and the converters are synchronized by the same control clock originating from one source. This enables full control of the phase from input to output. Alternatively to what is shown in Fig 9, the DSP can be the control clock master and all the ADCs and the DACs are slaves, or one of the DACs is a control clock master and the DSP, all the ADCs and the other DACs are control clock slaves.

Fig 10 shows a similar configuration in which a signal derived from the DSP 8' is transmitted in digital format via a wireless output transmitter. In the illustrated embodiment the wireless transmitter is a control clock slave together with one ADC 7", the DAC 11' and the DSP 8' with the other ADC 7' being the control clock master. According to the invention this enables the wirelessly digitally transmitted information/data to have a known phase relationship with the input signal into any of the ADC(s) 7', 7".

With reference to Figs 9 and 10, it is to be understood that the input to the two anti-alias filters 6 shown is suitably derived from tow separate sensors (not shown) after signal conditioning (not shown).

Any feature of the shown embodiments of the invention may be combined with any other feature or features as long as there is not a conflict between these features.

### REFERENCE NUMERALS

- 1:: A sensor, for example an accelerometer, that measures a parameter that relates to the condition of the machine that is being examined.
- 2:: Input conditioning; providing sensor power and gain if required
- 3:: Demodulation, typically some form of band limiting filters followed by demodulation (examples are enveloping, GSe). This may also include demodulating signals that are ultrasonic (SEE or Acoustic emissions)
- 4:: Filtering to remove spurious out of band signals or time domain integration
- 5:: Multiplexor to select straight, filtered or demodulated paths
- 6:: Anti-alias for removal of out of band signals
- 7:: An analogue to digital converter (ADC) to convert analogue signal into digital representation
- 7':: An ADC, control clock master
- 7":: An ADC, control clock slave
- 8:: A digital signal processor (DSP) to perform digital processing, for example FFT
- 8':: A DSP, control clock slave
- 9:: Amplifier to boost output from analogue signal path to levels required to drive a headphone
- 10:: Headphones for user to listen into analogue signal
- 11:: A DAC, driven from the DSP with a digital stream representing, in this embodiment, a desired audio output which drives a headphone amplifier and headphones
- 11':: A DAC, control clock slave
- 12:: A wireless transmitter
- 12':: A wireless transmitter, control clock slave
- 13:: A wireless receiver (which may be part of a peripheral device)
- 14:: Strobe
- 15:: Actuator

## Claims

1. An off-line signal analyzer comprising an analogue to digital converter (7, 7', 7"), which converts analogue input signals to digital signals, the analogue input signals comprising a phase, the analyzer further comprising a digital signal processor (8, 8') configured to perform digital processing on the digital signals from the analogue to digital converter, the signal analyzer further comprises a wireless transmitter (12, 12') configured to provide a wireless output signal derived from the digital signal processor, **characterised in that** the wireless output signal is a modulated digital signal and is synchronized with the analogue to digital converter (7, 7', 7") at least with respect to the signal phase.

2. An off-line signal analyzer in accordance with claim 1, in which the analogue to digital converter (7, 7', 7") and the wireless transmitter (12, 12') have a common control clock.

3. An off-line signal analyzer in accordance with any preceding claim, in which the digital signal processor (8, 8') has a common control clock with the analogue to digital converter (7, 7', 7") and/or the wireless transmitter (12, 12').

4. An off-line signal analyzer in accordance with claim 2 or 3, in which one of the analogue to digital converter (7, 7', 7"), the wireless transmitter (12, 12'), or the digital signal processor (8, 8') is a control clock master and the others are control clock slaves.

5. An off-line signal analyzer in accordance with any preceding claim, in which the wireless transmitter (12, 12') is configured to transmit a digital signal derived directly from the digital signal processor (8, 8').

6. An off-line signal analyzer in accordance with any preceding claim, in which the wireless transmitter (12, 12') comprises a Bluetooth interface.

7. An off-line signal analyzer in accordance with claim 6, in which the Bluetooth interface comprises a multi drop Bluetooth interface.

8. An off-line signal analyzer in accordance with any preceding claim, in which the wireless output signal comprises a real time output.

9. An off-line signal analyzer in accordance with any preceding claim, in which the wireless output signal is configured to drive a peripheral device selected from the list consisting of:
a listening device;
headphones (10);
an image recorder;
a camera;
a timing device;
a strobe light (14);
an actuator (15);
a frequency generator; and
a signal source for exciting a structure to be examined.

10. An off-line signal analyzer in accordance with any preceding claim, in which the wireless output signal comprises at least one signal selected from the list consisting of:
a signal configured to drive a listening device;
a signal configured to drive headphones;
a signal configured to control an image recorder;
a signal configured to control a camera;
a signal configured to control a timing device;
a signal configured to control a strobe light;
a signal configured to control an actuator;
a signal configured to control a frequency generator; and
a signal configured to control a signal source for exciting a structure to be examined.

11. An off-line signal analyzer in accordance with any preceding claim, in which the wireless transmitter (12, 12') is configured to provide a signal to at least two different peripheral devices.

12. An off-line signal analyzer in accordance with claim 11, in which the wireless transmitter (12, 12') is configured to simultaneously provide a signal to a least two different peripheral devices.

13. An off-line signal analyzer in accordance with any preceding claim, comprising a selector configured to permit selection such that the signal from the wireless transmitter (12, 12') comprises at least two signals selected from the list consisting of:
a signal configured to drive a listening device;
a signal configured to control an image recorder;
a signal configured to control a timing device;
a signal configured to control a strobe light;
a signal configured to control a signal source for exciting a structure to be examined.

14. An off-line signal analyzer in accordance with any preceding claim, in which the signal from the wireless transmitter (12, 12') comprises at least one signal selected from the list consisting of:
a signal that is representative of the input signal to the digital signal processor (8, 8');
a signal that has been digitally filtered by the digital signal processor;
a signal that has been digitally filtered and demodulated by the digital signal processor;
a signal that has been digitally attenuated by the digital signal processor;
a signal that has been digitally amplified by the digital signal processor;
a signal that has been shifted in frequency by the digital signal processor; and
a stereo signal having left and right channels providing different data.

15. An off-line signal analyzer in accordance with any preceding claim, comprising a selector configured to permit selection such that the signal from the wireless transmitter (12, 12') comprises at least two signals selected from the list consisting of:
a signal that is representative of the input signal to the digital signal processor (8, 8');
a signal that has been digitally filtered by the digital signal processor;
a signal that has been digitally filtered and demodulated by the digital signal processor;
a signal that has been digitally attenuated by the digital signal processor;
a signal that has been digitally amplified by the digital signal processor;
a signal that has been shifted in frequency by the digital signal processor;
a stereo signal having left and right channels providing different data; and
a pre-recorded signal.

## Patentansprüche

1. Offline-Signalanalysator, der einen Analog/Digital-Umsetzer (7, 7', 7") umfasst, der analoge Eingangssignale in digitale Signale umsetzt, wobei die analogen Eingangssignale eine Phase besitzen, wobei der Analysator ferner einen digitalen Signalprozessor (8, 8') umfasst, der konfiguriert ist, eine digitale Verarbeitung an den digitalen Signalen aus dem Analog/Digital-Umsetzer durchzuführen, wobei der Signalanalysator ferner einen drahtlosen Sender (12, 12') umfasst, der konfiguriert ist, ein drahtloses Ausgangssignal bereitzustellen, das aus dem digitalen Signalprozessor abgeleitet ist, **dadurch gekennzeichnet, dass** das drahtlose Ausgangssignal ein moduliertes digitales Signal ist und mit dem Analog/Digital-Umsetzer (7, 7', 7") wenigstens in Bezug auf die Signalphase synchronisiert ist.

2. Offline-Signalanalysator nach Anspruch 1, wobei der Analog/Digital-Umsetzer (7, 7', 7") und der drahtlose Sender (12, 12') einen gemeinsamen Steuertakt aufweisen.

3. Offline-Signalanalysator nach einem der vorhergehenden Ansprüche, wobei der digitale Signalprozessor (8, 8') einen gemeinsamen Steuertakt mit dem Analog/Digital-Umsetzer (7, 7', 7") und/oder dem drahtlosen Sender (12, 12') aufweist.

4. Offline-Signalanalysator nach Anspruch 2 oder 3, wobei der Analog/Digital-Umsetzer (7, 7', 7") oder der drahtlose Sender (12, 12') oder der digitale Signalprozessor (8, 8') ein Steuertakt-Master ist und die jeweils anderen Steuertakt-Slaves sind.

5. Offline-Signalanalysator nach einem der vorhergehenden Ansprüche, wobei der drahtlose Sender (12, 12') konfiguriert ist, ein digitales Signal zu senden, das unmittelbar aus dem digitalen Signalprozessor (8, 8') abgeleitet ist.

6. Offline-Signalanalysator nach einem der vorhergehenden Ansprüche, wobei der drahtlose Sender (12, 12') eine Bluetooth-Schnittstelle umfasst.

7. Offline-Signalanalysator nach Anspruch 6, wobei die Bluetooth-Schnittstelle eine Mehrpunkt-Bluetooth-Schnittstelle umfasst.

8. Offline-Signalanalysator nach einem der vorhergehenden Ansprüche, wobei das drahtlose Ausgangssignal eine Echtzeit-Ausgabe umfasst.

9. Offline-Signalanalysator nach einem der vorhergehenden Ansprüche, wobei das drahtlose Ausgangssignal konfiguriert ist, eine Peripherievorrichtung anzusteuern, die aus der Liste ausgewählt ist, die aus Folgendem besteht:
einer Abhörvorrichtung;
Kopfhörer (10);
einer Bildaufzeichnungsvorrichtung;
einer Kamera;
einer Zeitmessvorrichtung;
einem Stroboskop (14);
einem Aktuator (15);
einem Frequenzgenerator; und
einer Signalquelle zum Anregen einer Struktur, die untersucht werden soll.

10. Offline-Signalanalysator nach einem der vorhergehenden Ansprüche, wobei das drahtlose Ausgangssignal wenigstens ein Signal umfasst, das aus der Liste ausgewählt ist, die aus Folgendem besteht:
einem Signal, das konfiguriert ist, eine Abhörvorrichtung anzusteuern;
einem Signal, das konfiguriert ist, Kopfhörer anzusteuern;
einem Signal, das konfiguriert ist, eine Bildaufzeichnungsvorrichtung zu steuern;
einem Signal, das konfiguriert ist, eine Kamera zu steuern;
einem Signal, das konfiguriert ist, eine Zeitmessvorrichtung zu steuern;
einem Signal, das konfiguriert ist, ein Stroboskop zu steuern;
einem Signal, das konfiguriert ist, einen Aktuator zu steuern;
einem Signal, das konfiguriert ist, einen Frequenzgenerator zu steuern; und
einem Signal, das konfiguriert ist, eine Signalquelle zum Anregen einer Struktur, die untersucht werden soll, zu steuern.

11. Offline-Signalanalysator nach einem der vorhergehenden Ansprüche, wobei der drahtlose Sender (12, 12') konfiguriert ist, ein Signal für wenigstens zwei unterschiedliche Peripherievorrichtungen bereitzustellen.

12. Offline-Signalanalysator nach Anspruch 11, wobei der drahtlose Sender (12, 12') konfiguriert ist, gleichzeitig ein Signal für wenigstens zwei unterschiedliche Peripherievorrichtungen bereitzustellen.

13. Offline-Signalanalysator nach einem der vorhergehenden Ansprüche, der eine Auswahlvorrichtung umfasst, die konfiguriert ist, eine Auswahl zu ermöglichen, so dass das Signal von dem drahtlosen Sender (12, 12') wenigstens zwei Signale umfasst, die aus der Liste ausgewählt sind, die aus Folgendem besteht:
einem Signal, das konfiguriert ist, eine Abhörvorrichtung anzusteuern;
einem Signal, das konfiguriert ist, eine Bildaufzeichnungsvorrichtung zu steuern;
einem Signal, das konfiguriert ist, eine Zeitmessvorrichtung zu steuern;
einem Signal, das konfiguriert ist, ein Stroboskop zu steuern;
einem Signal, das konfiguriert ist, eine Signalquelle zum Anregen einer Struktur, die untersucht werden soll, zu steuern.

14. Offline-Signalanalysator nach einem der vorhergehenden Ansprüche, wobei das Signal von dem drahtlosen Sender (12, 12') wenigstens ein Signal umfasst, das aus der Liste ausgewählt ist, die aus Folgendem besteht:
einem Signal, das repräsentativ ist für das Eingangssignal zum digitalen Signalprozessor (8, 8');
einem Signal, das durch den digitalen Signalprozessor digital gefiltert wurde;
einem Signal, das durch den digitalen Signalprozessor digital gefiltert und demoduliert wurde;
einem Signal, das durch den digitalen Signalprozessor digital gedämpft wurde;
einem Signal, das durch den digitalen Signalprozessor digital verstärkt wurde;
einem Signal, dessen Frequenz durch den digitalen Signalprozessor verschoben wurde; und
einem Stereosignal, das linke und rechte Kanäle aufweist, die unterschiedliche Daten bereitstellen.

15. Offline-Signalanalysator nach einem der vorhergehenden Ansprüche, der eine Auswahlvorrichtung umfasst, die konfiguriert ist, eine Auswahl zu ermöglichen, so dass das Signal von dem drahtlosen Sender (12, 12') wenigstens zwei Signale umfasst, die aus der Liste ausgewählt sind, die aus Folgendem besteht:
einem Signal, das repräsentativ ist für das Eingangssignal zum digitalen Signalprozessor (8, 8');
einem Signal, das durch den digitalen Signalprozessor digital gefiltert wurde;
einem Signal, das durch den digitalen Signalprozessor digital gefiltert und demoduliert wurde;
einem Signal, das durch den digitalen Signalprozessor digital gedämpft wurde;
einem Signal, das durch den digitalen Signalprozessor digital verstärkt wurde;
einem Signal, dessen Frequenz durch den digitalen Signalprozessor verschoben wurde;
einem Stereosignal, das linke und rechte Kanäle aufweist, die unterschiedliche Daten bereitstellen; und
einem aufgezeichneten Signal.

## Revendications

1. Analyseur de signaux hors ligne, comprenant un convertisseur analogique-numérique (7, 7', 7"), qui convertit des signaux analogiques d'entrée en signaux numériques, les signaux analogiques d'entrée comprenant une phase, l'analyseur comprenant en outre un processeur numérique de signaux (8, 8') conçu pour soumettre à un traitement numérique les signaux numériques provenant du convertisseur analogique-numérique, l'analyseur de signaux comprenant en outre un émetteur sans fil (12, 12') conçu pour fournir un signal de sortie sans fil obtenu du processeur numérique de signaux, **caractérisé en ce que** le signal de sortie sans fil est un signal numérique modulé et est synchronisé avec le convertisseur analogique-numérique (7, 7', 7") au moins par rapport à la phase du signal.

2. Analyseur de signaux hors ligne selon la revendication 1, dans lequel le convertisseur analogique-numérique (7, 7', 7") et l'émetteur sans fil (12, 12') possèdent une horloge de commande commune.

3. Analyseur de signaux hors ligne selon l'une quelconque des revendications précédentes, dans lequel le processeur numérique de signaux (8, 8') possède une horloge de commande commune avec le convertisseur analogique-numérique (7, 7', 7") et/ou l'émetteur sans fil (12, 12').

4. Analyseur de signaux hors ligne selon la revendication 2 ou 3, dans lequel le convertisseur analogique-numérique (7, 7', 7") ou bien l'émetteur sans fil (12, 12') ou bien le processeur numérique de signaux (8, 8') est un maître d'horloge de commande et les autres sont des esclaves d'horloge de commande.

5. Analyseur de signaux hors ligne selon l'une quelconque des revendications précédentes, dans lequel l'émetteur sans fil (12, 12') est conçu pour émettre un signal numérique obtenu directement du processeur numérique de signaux (8, 8').

6. Analyseur de signaux hors ligne selon l'une quelconque des revendications précédentes, dans lequel l'émetteur sans fil (12, 12') comprend une interface Bluetooth.

7. Analyseur de signaux hors ligne selon la revendication 6, dans lequel l'interface Bluetooth comprend une interface Bluetooth multipoint.

8. Analyseur de signaux hors ligne selon l'une quelconque des revendications précédentes, dans lequel le signal de sortie sans fil comprend une sortie en temps réel.

9. Analyseur de signaux hors ligne selon l'une quelconque des revendications précédentes, dans lequel le signal de sortie sans fil est conçu pour piloter un dispositif périphérique choisi dans la liste constituée par :
un dispositif d'écoute ;
un casque (10) ;
un enregistreur d'images ;
un appareil photographique ;
un dispositif de temporisation ;
une lumière stroboscopique (14) ;
un actionneur (15) ;
un générateur de fréquence ; et
une source de signaux pour exciter une structure à examiner.

10. Analyseur de signaux hors ligne selon l'une quelconque des revendications précédentes, dans lequel le signal de sortie sans fil comprend au moins un signal choisi dans la liste constituée par :
un signal conçu pour piloter un dispositif d'écoute ;
un signal conçu pour piloter un casque ;
un signal conçu pour commander un enregistreur d'images ;
un signal conçu pour commander un appareil photographique ;
un signal conçu pour commander un dispositif de temporisation ;
un signal conçu pour commander une lumière stroboscopique ;
un signal conçu pour commander un actionneur ;
un signal conçu pour commander un générateur de fréquence ; et
un signal conçu pour commander une source de signaux pour exciter une structure à examiner.

11. Analyseur de signaux hors ligne selon l'une quelconque des revendications précédentes, dans lequel l'émetteur sans fil (12, 12') est conçu pour fournir un signal à au moins deux dispositifs périphériques différents.

12. Analyseur de signaux hors ligne selon la revendication 11, dans lequel l'émetteur sans fil (12, 12') est conçu pour fournir un signal simultanément à au moins deux dispositifs périphériques différents.

13. Analyseur de signaux hors ligne selon l'une quelconque des revendications précédentes, comprenant un sélecteur conçu pour permettre une sélection de sorte que le signal provenant de l'émetteur sans fil (12, 12') comprenne au moins deux signaux choisis dans la liste constituée par :
un signal conçu pour piloter un dispositif d'écoute ;
un signal conçu pour commander un enregistreur d'images ;
un signal conçu pour commander un dispositif de temporisation ;
un signal conçu pour commander une lumière stroboscopique ;
un signal conçu pour commander une source de signaux pour exciter une structure à examiner.

14. Analyseur de signaux hors ligne selon l'une quelconque des revendications précédentes, dans lequel le signal provenant de l'émetteur sans fil (12, 12') comprend au moins un signal choisi dans la liste constituée par :
un signal qui représente le signal d'entrée appliqué au processeur numérique de signaux (8, 8') ;
un signal qui a été filtré numériquement par le processeur numérique de signaux ;
un signal qui a été filtré et démodulé numériquement par le processeur numérique de signaux ;
un signal qui a été atténué numériquement par le processeur numérique de signaux ;
un signal qui a été amplifié numériquement par le processeur numérique de signaux ;
un signal qui a été déplacé en fréquence par le processeur numérique de signaux ; et
un signal stéréo comprenant des voies de gauche et de droite fournissant des données différentes.

15. Analyseur de signaux hors ligne selon l'une quelconque des revendications précédentes, comprenant un sélecteur conçu pour permettre une sélection de sorte que le signal provenant de l'émetteur sans fil (12, 12') comprenne au moins deux signaux choisis dans la liste constituée par :
un signal qui représente le signal d'entrée appliqué au processeur numérique de signaux (8, 8') ;
un signal qui a été filtré numériquement par le processeur numérique de signaux ;
un signal qui a été filtré et démodulé numériquement par le processeur numérique de signaux ;
un signal qui a été atténué numériquement par le processeur numérique de signaux ;
un signal qui a été amplifié numériquement par le processeur numérique de signaux ;
un signal qui a été déplacé en fréquence par le processeur numérique de signaux ;
un signal stéréo comprenant des voies de gauche et de droite fournissant des données différentes ; et
un signal préenregistré.
